(19) Europäisches Patentamt

European Patent Office

Office européen des brevets

(11) **EP 0 860 477 B1**

(12) **FASCICULE DE BREVET EUROPEEN**

(45) Date de publication et mention
de la délivrance du brevet:
**12.10.2005 Bulletin 2005/41**

(51) Int Cl.⁷: **C09C 3/04**, C09C 1/02,
C09D 17/00, D21H 19/38,
D21H 17/67

(21) Numéro de dépôt: **98420010.5**

(22) Date de dépôt: **21.01.1998**

(54) **Utilisation de sels d'acides polyaspartiques comme agent d'aide au broyage et suspension aqueuse de matériaux minéraux**

Verwendung von Polyasparaginesäure-Salzen als Mahlhilfsmittel und wässrige Dispersion von mineralischen Stoffen

Use of polyaspartic acid salts as grinding aids and aqueous dispersion of mineral materials

(84) Etats contractants désignés:
**AT BE CH DE DK ES FI FR GB GR IE IT LI LU NL PT SE**
Etats d'extension désignés:
**RO SI**

(30) Priorité: **14.02.1997 FR 9701973**

(43) Date de publication de la demande:
**26.08.1998 Bulletin 1998/35**

(73) Titulaire: **COATEX S.A.S.**
**69730 Genay (FR)**

(72) Inventeurs:
• **Suau, Jean Marc**
 **69480 Lucenay (FR)**
• **Jacquemet, Christian**
 **69005 Lyon (FR)**
• **Mongoin, Jacques**
 **69550 Quincieux (FR)**

(56) Documents cités:
**WO-A-92/15535**

• **PATENT ABSTRACTS OF JAPAN vol. 95, no. 10, 30 novembre 1995 & JP 07 172888 A (MITSUI TOATSU CHEM. INC.), 11 juillet 1995,**

Remarques:
Le dossier contient des informations techniques présentées postérieurement au dépôt de la demande et ne figurant pas dans le présent fascicule.

## Description

La présente invention concerne l'utilisation des sels des acides polyaspartiques comme agent d'aide au broyage de matières minérales en suspension aqueuse.

La présente invention conceme également le procédé de broyage mettant en oeuvre les sels des acides polyaspartiques comme agent d'aide au broyage de matières minérales en suspension aqueuse.

La présente invention conceme enfin les suspensions aqueuses minérales affinées contenant ledit agent et destinées à des applications pigmentaires dans le domaine de l'industrie du papier.

L'homme de l'art, pour pouvoir utiliser ces suspensions minérales aqueuses dans le domaine pigmentaire, doit les transformer par broyage en une suspension aqueuse de grande finesse dont les grains constitutifs ont une dimension la plus faible possible c'est-à-dire inférieure à quelques micromètres.

En même temps, de telles suspensions doivent disposer d'une viscosité Brookfield ayant une valeur permettant d'éviter tout risque de sédimentation ou de prise en masse des particules de matières minérales rendant ainsi possible une manipulation aisée par l'utilisateur malgré un stockage pendant plusieurs jours dans des cuves sans agitation. De plus, ces suspensions doivent avoir une teneur en matière minérale la plus élevée possible afin de diminuer tous les coûts de production et de transport inhérents à la quantité d'eau présente.

Mais l'obtention de telles suspensions idéales, réunissant toutes ces qualités fondamentales, pose à lhomme du métier, des problèmes lors des opérations de broyage en milieu aqueux c'est-à-dire des opérations de réduction de la taille des particules des substances minérales et d'augmentation de leur surface spécifique.

Il est à noter que ces problèmes, dus à l'extrême finesse des particules et rencontrés lors des opérations de broyage en milieu aqueux et à forte concentration en matière minérale tels que par exemple l'augmentation rapide de la viscosité, peuvent aboutir à la prise en masse des suspensions dans les cuves de stockage ou encore au blocage des broyeurs, et ne se rencontrent pas dans les opérations de délitage dont l'objet est la mise en suspension dans l'eau des matières minérales sans changement de la taille des particules constitutives des dites matières.

Ainsi, depuis longtemps déjà, il est bien connu d'utiliser comme agent de broyage des polymères hydrosolubles à base d'acide polyacrylique ou de ses dérivés (EP 0 100 947, EP 0 542 643, EP 0 542 644) pour fournir des suspensions minérales aqueuses répondant aux critères de qualité précités.

Mais ces divers types d'agents de broyage bien connus de l'homme de l'art ont pour inconvénient d'être peu biodégradables.

Jusqu'à aujourd'hui l'homme du métier ne disposait pas de solutions satisfaisantes pour résoudre ce problème de mise en oeuvre d'agent d'aide au broyage de substances minérales lui permettant d'obtenir des suspensions aqueuses de substances minérales affinées, fortement concentrées en matières minérales, ne sédimentant pas tout en étant pompables et répondant aux soucis de protection de l'environnement.

Après de nombreuses recherches la Demanderesse a maintenant trouvé que l'utilisation de sels d'acides polyaspartiques comme agent d'aide au broyage permet de résoudre les problèmes précités, à savoir permet l'obtention de suspensions aqueuses de substances minérales affinées, ne sédimentant pas, pompables et fortement concentrées en matières minérales tout en mettant en oeuvre des agents d'aide au broyage biodégradables. La mise en oeuvre de tels types d'agents ouvre ainsi une voie partant de produits naturels tout à fait nouvelle et différente de la voie bien connue des acryliques.

Des documents (WO 94/19409, WO 92/15535) révèlent l'utilisation de sels d'acides polyaspartiques comme agent de dispersion de charges telles que le carbonate de calcium. Mais aucun n'indique l'utilisation de tels polymères comme agent d'aide au broyage de matières minérales en suspension aqueuse, pompables, ne sédimentant pas, fortement concentrées en matières sèches et destinées à l'industrie du papier.

Ne pouvant utiliser ses connaissances de sélection de poids moléculaire des acryliques, ceux-ci étant sans relation avec ceux des aspartiques, la Demanderesse a maintenant trouvé que l'utilisation de certains sels d'acides polyaspartiques de poids moléculaire moyen en poids compris entre 3500 et 25000, préférentiellement entre 4000 et 10000, et très préférentiellement entre 5300 et 8000 permet d'aboutir à des suspensions aqueuses de matières minérales affinées, pompables, fortement concentrées en matière sèche et ne sédimentant pas.

Ainsi, un des buts de l'invention est l'utilisation des sels des acides polyaspartiques comme agent d'aide au broyage afin d'obtenir des suspensions aqueuses de substances minérales pompables, ne sédimentant pas, fortement concentrées en matières minérales et affinées c'est-à-dire des suspensions minérales pompables, ne sédimentant pas, fortement concentrées en matière minérale dont les grains constitutifs ont une dimension la plus fine possible à savoir un diamètre médian inférieur à trois micromètres, préférentiellement inférieur à un micromètre et dont la viscosité Brookfield n'augmente que faiblement dans le temps, c'est à dire jusqu'à une valeur permettant une manipulation aisée par l'utilisateur malgré un stockage pendant plusieurs jours, voire plusieurs semaines dans des cuves sans agitation.

Un autre but de l'invention est de fournir un procédé de broyage en suspension aqueuse de particules minérales mettant en oeuvre les sels des acides polyaspartiques sélectionnés comme agent d'aide au broyage.

Un but supplémentaire de l'invention est de fournir des suspensions aqueuses de matières minérales affinées, ne sédimentant pas, pompables et fortement concentrées en substances minérales.

Ces suspensions, selon l'invention, destinées à des applications pigmentaires et dont les grains constitutifs ont une dimension la plus fine possible c'est-à-dire un diamètre médian inférieur à trois micromètres et préférentiellement à un micromètre, ont une viscosité n'augmentant que faiblement dans le temps, ainsi qu'une forte concentration en matières minérales à savoir d'au moins 70 % en matières minérales.

Un autre but de l'invention concerne l'utilisation de ces suspensions aqueuses minérales affinées au domaine de la charge de masse et du couchage du papier.

Ces buts sont atteints grâce à l'utilisation selon l'invention des sels des acides polyaspartiques comme agent d'aide au broyage.

Ces sels des acides polyaspartiques sont notamment issus de l'hydrolyse et de la neutralisation des produits de la condensation thermique des acides aspartiques avec ou sans catalyseur tel que par exemple un acide fort pour augmenter le poids moléculaire ou encore un acide polycarboxylique hydroxylé pour diminuer le poids moléculaire. Ces sels peuvent encore être obtenus par traitement et fractionnement, statique ou dynamique à l'aide d'un ou plusieurs solvants, des sels des acides polyaspartiques, ces acides polyaspartiques étant synthétisés par la condensation thermique des acides aspartiques, eux-mêmes obtenu par un quelconque procédé de synthèse connu de l'homme de l'art tel que par exemple la synthèse enzymatique à partir d'amidon ou bien encore par voie chimique à partir d'anhydride maléique et/ou acide fumarique. Ces sels des acides polyaspartiques sont sélectionnés parmi les sels des acides polyaspartiques ayant un poids moléculaire moyen en poids, mesuré par GPC en phase aqueuse étalonnée au moyen de polyacrylates de sodium standard commercialisés par la société Polymer Standards Services (Allemagne), compris entre 3500 et 25000, préférentiellement entre 4000 et 10000, très préférentiellement entre 5300 et 8000, et sont encore choisis parmi les polyaspartates neutralisés par au moins un agent d'hydrolyse et de neutralisation disposant d'une fonction monovalente ou par la combinaison d'au moins un agent d'hydrolyse et de neutralisation disposant d'une fonction monovalente avec au moins un agent d'hydrolyse et de neutralisation disposant d'une fonction polyvalente.

Pour mieux comprendre un des objets de l'invention, il est souhaitable de préciser que par agent d'hydrolyse et de neutralisation disposant d'une fonction monovalente la Demanderesse entend les agents ayant la capacité de réagir avec le site imide précurseur de l'acide polyaspartique, et que par agent d'hydrolyse et de neutralisation disposant d'une fonction polyvalente la Déposante entend les agents ayant la capacité de réagir avec le nombre de sites imides précurseurs de l'acide polyaspartique et correspondant à la valence du cation neutralisant.

De même par acides polyaspartiques la Demanderesse entend les homopolymères des acides aspartiques résultant de la polycondensation thermique catalysée ou non des acides aspartiques (acide L-aspartique ou acide D-aspartique ou leurs mélanges) ou bien encore résultant de la mise en oeuvre de l'anhydride maléique et/ou de l'acide fumarique. Par acides polyaspartiques elle entend également les mélanges d'homopolymères des acides aspartiques avec des homopolymères de l'acide acrylique ou avec du polysuccinimide ou bien enfin les mélanges d'homopolymères des acides aspartiques avec des copolymères de l'acide acrylique avec d'autres monomères éthyléniquement insaturés tels que par exemple l'acide méthacrylique, l'anhydride maléique, l'acrylamide, le méthacrylamide, l'acide acrylamido-méthyl-propane-sulfonique, l'ester phosphorique de l'acrylate et/ou méthacrylate d'hydroxy éthyle et/ou méthyle ou leurs mélanges.

Ainsi, l'agent d'hydrolyse et de neutralisation disposant d'une fonction monovalente, est choisi dans le groupe constitué par les composés contenant des cations alcalins, en particulier le sodium et le potassium, ou encore l'ammonium, ou bien les amines primaires ou secondaires aliphatiques et/ou cycliques telles que par exemple les éthanolamines, la mono et diéthylamine, ou encore la cyclohexylamine.

L'agent d'hydrolyse et de neutralisation disposant d'une fonction polyvalente est, quant à lui, choisi dans le groupe constitué par les composés contenant des cations divalents alcalino-terreux, en particulier le magnésium et le calcium, ou encore le zinc, de même que par les cations trivalents, dont en particulier l'aluminium, ou encore, par certains composés contenant des cations de valence plus élevée.

La réaction d'hydrolyse et de neutralisation des sites imides précurseurs des acides polyaspartiques peut être obtenue par des combinaisons possibles entre au moins un agent d'hydrolyse et de neutralisation disposant d'une fonction monovalente et au moins un agent d'hydrolyse et de neutralisation disposant d'une fonction polyvalente.

Parmi les couples ou triplets d'agents d'hydrolyse et de neutralisation, il est courant d'utiliser des couples ou triplets constitués par un agent disposant d'une fonction monovalente et un agent disposant d'une fonction divalente ou trivalente, tels que par exemple les couples ou triplets ($Na^+$ et/ou $K^+$ et/ou $NH_4^+$ et $Ca^{++}$), ($Na^+$ et/ou $K^+$ et/ou $NH_4^+$ et $Mg^{++}$), ($Na^+$ et/ou $K^+$ et/ou $NH_4^+$ et $Zn^{++}$), ($Na^+$ et/ou $K^+$ et/ou $NH_4^+$ et $Al^{+++}$), ($Na^+$ et/ou $K^+$ et/ou $NH_4^+$ et amine).

Toutes ces combinaisons d'hydrolyse et de neutralisation ne peuvent être limitées aux quelques cas illustrant la potentialité de l'invention.

Chaque agent d'hydrolyse et de neutralisation conduisant au polymère utilisé selon l'invention comme agent d'aide au broyage, intervient selon des taux de neutralisation propres à chaque fonction de valence.

Selon une variante, les sels des acides polyaspartiques, destinés à être utilisés selon invention comme agent d'aide au broyage peuvent être constitués par la fraction de ces sels issus des méthodes bien connues de synthèse des acides polyaspartiques puis séparés de manière à obtenir des sels des acides polyaspartiques dont le poids moléculaire moyen se situe entre 3500 et 25000, préférentiellement entre 4000 et 10000 et très préférentiellement entre 5300 et 8000 mesuré par GPC en phase aqueuse, étalonné au moyen de polyacrylates de sodium standard commercialisés par la société Polymer Standards Service (Allemagne) sous les noms de PSS-PAA variant de 18000 à 2000 grammes/mole ($\overline{Mw}$). Il est souhaitable à ce niveau de préciser que tous les poids moléculaires moyens en poids des sels des acides polyaspartiques indiqués tout au long de la présente demande de brevet sont déterminés par GPC en phase aqueuse étalonnée au moyen de polyacrylates de sodium standard commercialisés par la société Polymer Standards Service (Allemagne) sous les noms de PSS-PAA variant de 18000 à 2000 grammes/mole ($\overline{Mw}$).

Ainsi, la fraction du sel des acides polyaspartiques de poids moléculaire moyen en poids compris entre 3500 et 25000, préférentiellement entre 4000 et 10000 et très préférentiellement entre 5300 et 8000 destinée à être utilisée comme agent d'aide au broyage est généralement isolée et extraite de la solution qui résulte de l'hydrolyse et de la neutralisation des acides polyaspartiques par au moins un agent d'hydrolyse et de neutralisation disposant d'une fonction monovalente ou par la combinaison d'au moins un agent dhydrolyse et de neutralisation disposant d'une fonction monovalente avec au moins un agent dhydrolyse et de neutralisation disposant d'une fonction polyvalente, que ces acides polyaspartiques soient un homopolymère des acides aspartiques tels que l'acide L-aspartique ou l'acide D-aspartique ou leurs mélanges ou bien encore un mélange d'homopolymères des acides aspartiques avec du polysuccinimide ou avec des homopolymères ou copolymères de l'acide acrylique.

Cette solution du polymérisat résultant de l'hydrolyse et de la neutralisation est traitée selon des procédés statiques ou dynamiques connus de l'homme de l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges. Dès lors, il se produit une séparation en deux phases que l'on recueille et dont l'une au moins constitue la fraction des sels de l'acide polyaspartique hydrolysé et neutralisé par au moins un agent d'hydrolyse et de neutralisation disposant d'une fonction monovalente ou par la combinaison d'au moins un agent d'hydrolyse et de neutralisation disposant d'une fonction monovalente avec au moins un agent d'hydrolyse et de neutralisation disposant d'une fonction polyvalente. Cette fraction a un poids moléculaire moyen en poids compris entre 3500 et 25000, préférentiellement entre 4000 et 10000, et très préférentiellement entre 5300 et 8000.

Les phases obtenues peuvent alors être soumises à distillation pour éliminer le ou les solvants utilisés pour le fractionnement. Il est également possible et souhaitable dans certains cas d'affiner encore la sélection de la fraction des sels des acides polyaspartiques en traitant à nouveau les phases précédemment recueillies, au moyen d'une nouvelle quantité de solvant polaire, qui peut être différent de celui initialement utilisé, ou qui peut encore être un mélange de solvants polaires. Il apparaît à nouveau deux phases dont l'une au moins est recueillie et constitue une fraction des sels des acides polyaspartiques dont le poids moléculaire moyen en poids se situe dans un domaine plus étroit. En pratique, il s'est révélé intéressant de sélectionner la fraction des sels des acides polyaspartiques hydrolysés et neutralisés par au moins un agent d'hydrolyse et de neutralisation disposant d'une fonction monovalente ou par la combinaison d'au moins un agent d'hydrolyse et de neutralisation disposant d'une fonction monovalente avec au moins un agent d'hydrolyse et de neutralisation disposant d'une fonction polyvalente et dont le poids moléculaire moyen en poids est compris entre 3500 et 25000, préférentiellement entre 4000 et 10000, et très préférentiellement entre 5300 et 8000.

La phase liquide résultant en sels des acides polyaspartiques peut être utilisée sous cette forme comme agent d'aide au broyage des substances minérales à affiner mais elle peut également être traitée par tout moyen connu, pour en éliminer cette phase et isoler les sels des acides polyaspartiques sous la forme d'une fine poudre qui peut être utilisée sous cette autre forme comme agent d'aide au broyage.

En pratique, selon l'invention, l'opération de broyage de la substance minérale consiste à affiner en particules très fines ladite substance avec un corps broyant dans un milieu aqueux contenant le sel des acides polyaspartiques utilisé comme agent d'aide au broyage. On forme, à l'aide de ce dernier, une suspension aqueuse de la substance minérale à broyer, dont les particules ont une dimension initiale au plus égale à 50 micromètres, en une quantité telle que la concentration en matière sèche de ladite suspension est d'au moins 70 % en poids.

A la suspension de la substance minérale à broyer, on ajoute le corps broyant de granulométrie avantageusement comprise entre 0,20 millimètre et 4 millimètres. Le corps broyant se présente en général sous la forme de particules de matériaux aussi divers que l'oxyde de silicium, l'oxyde d'aluminium, l'oxyde de zirconium ou de leurs mélanges ainsi que les résines synthétiques de haute dureté, les aciers, ou autres.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à microéléments.

L'agent d'aide au broyage est également introduit au sein du mélange formé par la suspension aqueuse de substances minérales et par le corps broyant à raison de 0,2 à 2 % en poids de la fraction séchée desdits polymères par rapport à la masse sèche de la substance minérale à affiner.

Le temps nécessaire pour obtenir une excellente finesse de la substance minérale après broyage varie selon la nature et la quantité des substances minérales à affiner et selon le mode d'agitation utilisé et la température du milieu pendant l'opération de broyage.

Ainsi, selon l'invention, le procédé de broyage en suspension aqueuse fortement concentrée en matériaux minéraux destinés à des applications pigmentaires consistant à affiner en particules très fines une suspension aqueuse de ces matériaux minéraux se caractérise en ce que l'on utilise comme agent d'aide au broyage 0,2 % à 2 % en poids sec par rapport au poids sec de matières minérales des sels des acides polyaspartiques de poids moléculaire moyen en poids compris entre 3500 et 25000 préférentiellement entre 4000 et 10000, et très préférentiellement entre 5300 et 8000.

Le procédé de broyage selon l'invention se caractérise également en ce que la suspension aqueuse de substances minérales à broyer comporte au moins 70 % en poids de matière sèche.

Les substances minérales à affiner selon le procédé de l'invention peuvent être d'origines très diverses telles que le carbonate de calcium naturel ou synthétique, les dolomies, c'est-à-dire toutes les substances minérales qui doivent être broyées pour être utilisables dans des applications telles que notamment la fabrication ou l'enduction des papiers.

Ainsi l'utilisation selon l'invention des sels des acides polyaspartiques comme agent d'aide au broyage dans le but d'obtenir par broyage des suspensions aqueuses de matières minérales affinées c'est-à-dire de diamètre médian inférieur à trois micromètres et préférentiellement inférieur à un micromètre, pompables, ne sédimentant pas et fortement concentrées en substances minérales se caractérise en ce que ledit sel des acides polyaspartiques est un sel d'acides polyaspartiques hydrolysé et neutralisé par au moins un agent d'hydrolyse et de neutralisation disposant d'une fonction monovalente ou par la combinaison d'au moins un agent d'hydrolyse et de neutralisation disposant d'une fonction monovalente avec au moins un agent d'hydrolyse et de neutralisation disposant d'une fonction polyvalente et en ce qu'il possède un poids moléculaire moyen en poids compris entre 3500 et 25000, préférentiellement entre 4000 et 10000, et très préférentiellement entre 5300 et 8000.

Les suspensions aqueuses selon l'invention obtenues par l'utilisation de sels des acides polyaspartiques comme agent d'aide au broyage se caractérisent en ce qu'elles contiennent 0,2 à 2 % en poids sec par rapport au poids sec de matières minérales d'un sel des acides polyaspartiques et en ce que le diamètre médian des particules affinées est inférieur à trois micromètres, préférentiellement inférieur à un micromètre et en ce que la concentration en matières minérales sèches est d'au moins 70 %.

La granulométrie des particules de matière minérale est déterminée à l'aide du granulomètre à rayons X Sédigraph 5100 commercialisée par la société Micromeritics.

La portée et l'intérêt de l'invention seront mieux perçus grâce aux exemples suivants qui ne sauraient être limitatifs.

EXEMPLE 1 :

Cet exemple a pour but d'illustrer l'utilisation de divers sels d'acides polyaspartiques comme agent d'aide au broyage.

Dans ce but, pour chacun des essais de l'exemple, une suspension aqueuse à une concentration de 76 % en poids de carbonate de calcium grossier a été préparée à partir d'un carbonate de calcium naturel dont les particules ont une dimension au plus égale à 50 micromètres provenant du gisement d'Orgon (France) en mettant en oeuvre :

- pour l'essai n° 1 illustrant l'invention, un polyaspartate neutralisé à 100 % molaire par de la soude et de poids moléculaire moyen en poids $\overline{Mw}$ = 5700.

- pour l'essai n° 2 illustrant l'invention, un polyaspartate neutralisé à 90 % molaire par de la soude et à 10 % molaire par de la chaux et de même poids moléculaire moyen en poids que celui de l'essai précédent,

- pour l'essai n° 3 illustrant l'invention, un polyaspartate neutralisé à 80 % molaire par de la soude et à 20 % molaire par de la chaux et de même poids moléculaire moyen en poids que celui de l'essai n° 1,

- pour l'essai n° 4 illustrant l'invention, un polyaspartate neutralisé à 75 % molaire par de la soude et à 25 % molaire par de la chaux et de même poids moléculaire en poids que celui de l'essai précédent,

- pour l'essai n° 5 illustrant l'invention, un polyaspartate neutralisé à 70 % molaire par de la soude et à 30 % molaire par de la chaux et de même poids moléculaire moyen en poids que celui de l'essai n° 1,

- pour l'essai n° 6 illustrant l'invention, un polyaspartate neutralisé à 70 % molaire par de la soude et à 30 % molaire par de l'hydroxyde de magnésium et de même poids moléculaire moyen en poids que celui de l'essai n° 1,

- pour l'essai n° 7 illustrant l'invention, un polyaspartate neutralisé à 65 % molaire par de la soude et à 35 % molaire par de la chaux et de même poids moléculaire moyen en poids que celui de l'essai n° 1,

- pour l'essai n° 8 illustrant l'invention, un polyaspartate neutralisé à 60 % molaire par de la soude et à 40 % molaire par de l'hydroxyde de magnésium et de même poids moléculaire moyen en poids que celui de l'essai n° 1,

- pour l'essai n° 9 illustrant l'invention, un polyaspartate neutralisé à 55 % molaire par de la soude et à 45 % molaire par de l'hydroxyde de magnésium et de même poids moléculaire moyen en poids que celui de l'essai n° 1,

- pour l'essai n° 10 illustrant l'invention, un polyaspartate neutralisé à 50 % molaire par de la soude et à 50 % molaire par de l'hydroxyde de magnésium et de même poids moléculaire moyen en poids que celui de l'essai n° 1,

- pour l'essai n° 11 illustrant l'invention, un polyaspartate neutralisé à 45 % molaire par de la soude et à 55 % molaire par de l'hydroxyde de magnésium et de même poids moléculaire moyen en poids que celui de l'essai n° 1.

Pour chacun des essais, l'agent d'aide au broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.

La vitesse circonférentielle du broyeur est de 10 mètres par seconde.

La suspension du carbonate de calcium est recyclée à raison de 18 litres par heure.

La sortie du broyeur Dyno-Mill est munie d'un séparateur de mailles 200 microns permettant de séparer la suspension résultant du broyage et le corps broyant. La température lors de chaque essai de broyage est maintenue à 60°C environ.

A la fin du broyage (T0), on récupère dans un flacon un échantillon de la suspension pigmentaire dont 80 % des particules ont une dimension inférieure à un micromètre, et on mesure la viscosité à l'aide d'un viscosimètre Brookfield type RVT, à une température de 20°C et des vitesses de rotation de 10 tours par minute et 100 tours par minute avec le mobile adéquat.

Après un temps de repos de 8 jours dans le flacon, la viscosité de la suspension est mesurée par introduction dans le flacon non agité du mobile adéquat du viscosimètre Brookfield type RVT, à une température de 20°C et des vitesses de rotation de 10 tours par minute et 100 tours par minute (viscosité AVAG = avant agitation).

De même, après une brève et énergique agitation, la viscosité de la suspension est à nouveau mesurée à une température de 20°C et des vitesses de rotation de 10 tours par minute et 100 tours par minute (viscosité APAG = après agitation).

Tous les résultats expérimentaux sont consignés dans le tableau 1 suivant, sachant que pour tous les essais, il n'y a pas de sédimentation du carbonate de calcium.

En effet, l'observation visuelle de chacun des flacons au repos a permis de constater qu'il n'y a pas de surnageant à la surface des échantillons tout comme l'introduction d'une spatule dans chacun des flacons a permis de déterminer qu'il n'y a aucun dépôt dur au fond des dits flacons.

La lecture du tableau 1 montre qu'il est possible d'obtenir des suspensions aqueuses de carbonate de calcium affinées, à haute concentration en carbonate de calcium ne sédimentant pas et pompables c'est-à-dire manipulables par l'utilisateur.

- TABLEAU 1 -

| | Essai n° | AGENT D'AIDE AU BROYAGE UTILISE | | | | Viscosité Brookfield de la suspension (à 20°C en mPa.s) à 76 % de matière sèche | | | | | |
|---|---|---|---|---|---|---|---|---|---|---|---|
| | | Neutralisation Taux-ion/Taux-ion (%) (%) | M$\overline{w}$ | Extrait sec de la suspension (%) | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
| Invention | 1 | 100 Na | 5700 | 76 | 0,94 | 8500 | 2400 | 34700 | 7130 | 24100 | 4430 |
| Invention | 2 | 90 Na/10 Ca | 5700 | 76 | 0,88 | 2300 | 800 | 24300 | 4060 | 3550 | 1370 |
| Invention | 3 | 80 Na/20 Ca | 5700 | 76 | 0,95 | 1680 | 520 | 18800 | 2970 | 3560 | 1180 |
| Invention | 4 | 75 Na/25 Ca | 5700 | 76 | 1,03 | 1480 | 500 | 18790 | 2670 | 2960 | 990 |
| Invention | 5 | 70 Na/30 Ca | 5700 | 76 | 1,05 | 1400 | 470 | 10330 | 1800 | 1620 | 550 |
| Invention | 6 | 70 Na/30 Mg | 5700 | 76 | 1,03 | 1650 | 530 | 5370 | 1775 | 1440 | 530 |
| Invention | 7 | 65 Na/35 Ca | 5700 | 76 | 1,11 | 1550 | 500 | 4550 | 1480 | 1240 | 880 |
| Invention | 8 | 60 Na/40 Mg | 5700 | 76 | 1,09 | 1860 | 580 | 7650 | 1575 | 1810 | 590 |
| Invention | 9 | 55 Na/45 Mg | 5700 | 76 | 1,12 | 1820 | 570 | 6720 | 1480 | 1750 | 510 |
| Invention | 10 | 50 Na/50 Mg | 5700 | 76 | 1,12 | 1900 | 570 | 5250 | 1280 | 1500 | 500 |
| Invention | 11 | 45 Na/55 Mg | 5700 | 76 | 1,23 | 2160 | 660 | 3840 | 1320 | 1670 | 510 |

AVAG : Mesure de la viscosité avant agitation de la suspension

APAG : Mesure de la viscosité après agitation de la suspension

EXEMPLE 2 :

Cet exemple a pour objet d'illustrer l'utilisation de sels d'acides polyaspartiques de divers poids moléculaires.

Pour ce faire on réalise pour chacun des essais de l'exemple, le broyage d'une suspension aqueuse de carbonate de calcium naturel dont les particules ont une dimension au plus égale à 50 micromètres provenant du gisement d'Orgon (France) dans les mêmes conditions opératoires et avec le même appareillage que dans l'exemple précédent en mettant en oeuvre des sels d'acides polyaspartiques de différents poids moléculaires.

Essai n° 12 :

Cet essai illustre la mise en oeuvre d'un polyaspartate neutralisé à 50 % molaire par de la soude et à 50 % molaire par de l'hydroxyde de magnésium, de poids moléculaire moyen en $\overline{Mw}$ = 1200. Ce sel d'acides polyaspartiques a été obtenu par le fractionnement à l'aide d'isopropanol d'un polyaspartate de poids moléculaire moyen en poids $\overline{Mw}$ = 5700.

La Demanderesse n'a pu réaliser le broyage de la suspension de carbonate de calcium à 76 % de concentration à cause d'une augmentation rapide et conséquente de la viscosité Brookfield de la suspension malgré une quantité d'ajout dudit polyaspartate supérieure à 2 % en poids sec par rapport au poids total de matières minérales.

Essai n° 13 :

Cet essai illustre la mise en oeuvre d'un polyaspartate neutralisé à 50 % molaire par de la soude et à 50 % molaire par de l'hydroxyde de magnésium, de poids moléculaire moyen en poids $\overline{Mw}$ = 1800.

Comme précédemment, ce sel d'acides polyaspartiques a été obtenu par le fractionnement à l'aide d'isopropanol d'un sel d'acides polyaspartiques neutralisé à 50 % molaire par de la soude et à 50 % molaire par de l'hydroxyde de magnésium et de poids moléculaire moyen en poids $\overline{Mw}$ = 5700.

Comme précédemment, la Demanderesse n'a pu réaliser le broyage de la suspension de carbonate de calcium à 76 % de concentration à cause de l'augmentation rapide et conséquente de la visosité Brookfield de la suspension.

Essai n° 14 :

Cet essai illustre la mise en oeuvre d'un polyaspartate neutralisé à 70 % molaire par de la soude et à 30 % molaire par de la chaux, de poids moléculaire moyen en $\overline{Mw}$ = 2400 obtenu par fractionnement, à l'aide d'isopropanol d'un sel d'acides polyaspartiques neutralisé à 70 % molaire par de la soude et à 30 % molaire par de la chaux et de poids moléculaire moyen en poids $\overline{Mw}$ = 5700.

Le broyage à 76 % de concentration s'est avéré également impossible pour les mêmes raisons que celles des essais n° 12 et 13.

Essai n° 15 :

Cet essai illustre la mise en oeuvre d'un sel de sodium d'acides polyaspartiques de poids moléculaire moyen en poids $\overline{Mw}$ = 3700.

Dans ce but une suspension aqueuse de carbonate de calcium grossier à 76 % de concentration en matière sèche a été préparée à partir du même carbonate de calcium naturel que ceux des essais précédents à l'aide du même appareillage et du même mode opératoire que précédemment décrits.

Le broyage n'a pu être poursuivi au delà d'une finesse correspondant à 66 % des particules de diamètre inférieur à un micromètre à cause d'une élévation trop importante de la viscosité Brookfield malgré un ajout supplémentaire à 1,23 % en poids sec d'agent d'aide au broyage par rapport au poids sec de carbonate de calcium à affiner.

Essai n° 16 :

Cet essai illustre la mise en oeuvre d'un polyaspartate neutralisé à 50 % molaire par de la soude et à 50 % molaire par de l'hydroxyde de magnésium, de poids moléculaire moyen en poids $\overline{Mw}$ = 4200 obtenu par fractionnement, à l'aide d'isopropanol, d'un polyaspartate neutralisé à 50 % molaire par de la soude et à 50 % molaire par de l'hydroxyde de magnésium et de poids moléculaire moyen en poids $\overline{Mw}$ = 5700.

Le broyage à la granulométrie de 80 % des particules ont un diamètre inférieur à un micromètre a été possible à l'aide du même appareillage et des mêmes conditions opératoires que ceux des essais précédents.

Essai n° 17 :

Cet essai illustre l'invention et met en oeuvre le polyaspartate de l'essai n° 10.

Essai n° 18 :

Cet essai illustre l'invention et met en oeuvre un polyaspartate neutralisé à 50 % molaire par de la soude et à 50 % molaire par de l'hydroxyde de magnésium, de poids moléculaire moyen en poids $\overline{Mw}$ = 7350 obtenu par fractionnement, à l'aide d'isopropanol d'un polyaspartate neutralisé à 50 % molaire par de la soude et à 50 % molaire par de l'hydroxyde de magnésium et de poids moléculaire moyen en poids $\overline{Mw}$ = 5700.
Le broyage à la granulométrie de 80 % des particules ont un diamètre inférieur à un micromètre a été possible à l'aide du même appareillage et des mêmes conditions opératoires que ceux des essais précédents.

Essai n° 19 :

Cet essai illustre la mise en oeuvre d'un polyaspartate de sodium de poids moléculaire moyen en poids $\overline{\overline{Mw}}$ = 21600.
Ce sel d'acides polyaspartiques a été obtenu par la condensation thermique des acides aspartiques en présence d'acide phosphorique suivi d'une hydrolyse de la totalité de la fonction imide par de la soude et de l'hydroxyde de magnésium.
Dans ce but une suspension aqueuse de carbonate de calcium grossier à 76 % de concentration en matière sèche a été préparée à partir du même carbonate de calcium naturel que ceux des essais précédents à l'aide du même appareillage et du même mode opératoire que précédemment décrits.
Le broyage n'a pu être poursuivi au delà d'une finesse correspondant à 60 % des particules de diamètre inférieur à un micromètre à cause d'une élévation trop importante de la viscosité Brookfield malgré un ajout supplémentaire à 1,37 % en poids sec d'agent d'aide au broyage par rapport au poids sec de carbonate de calcium à affiner.
Les résultats des différents essais de broyage avec les différentes quantités d'agent d'aide au broyage utilisées dans l'exemple figurent dans le tableau 2 suivant, sachant que, comme dans l'exemple précédent, aucune sédimentation n'est constatée.

- TABLEAU 2 -

| Essai n° | AGENT D'AIDE AU BROYAGE UTILISE | | | | Viscosité Brookfield de la suspension (à 20°C en mPa.s) à 76 % de matière sèche | | | | | |
| | Neutralisation Taux-ion/Taux-ion (%) | M̄w | Extrait sec de la suspension (%) | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
|---|---|---|---|---|---|---|---|---|---|---|
| 12 | 50 Na/50 Mg | 1200 | 76 | - | BROYAGE IMPOSSIBLE | | | | | |
| 13 | 50 Na/50 Mg | 1800 | 76 | - | BROYAGE IMPOSSIBLE | | | | | |
| 14 | 70 Na/30 Ca | 2400 | 76 | - | BROYAGE IMPOSSIBLE | | | | | |
| 15 Invention | 100 Na | 3700 | 76 | 1,23* | 4600 | 1360 | 49000 | 8000 | 16400 | 3560 |
| 16 Invention | 50 Na/50 Mg | 4200 | 76 | 0,82 | 2370 | 780 | 39700 | 5840 | 6300 | 1950 |
| 17 Invention | 50 Na/50 Mg | 5700 | 76 | 1,12 | 1900 | 570 | 5250 | 1280 | 1500 | 500 |
| 18 Invention | 50 Na/50 Mg | 7350 | 76 | 1,19 | 2160 | 560 | 1770 | 510 | 1720 | 460 |
| 19 Invention | 50 Na/50 Mg | 21600 | 76 | 1,37** | 2200 | 920 | 80000 | 11200 | 5800 | 2100 |

1,23* Correspond à la quantité d'agent utilisé pour une granulométrie de 66 % < 1 μm. Le broyage ayant été impossible au delà de 66 % < 1 μm.

1,37** Correspond à la quantité d'agent utilisé pour une granulométrie de 60 % < 1 μm.. Le broyage ayant été impossible au delà de 60 % < 1 μm.

AVAG : Mesure de la viscosité avant agitation de la suspension

APAG : Mesure de la viscosité après agitation de la suspension

La lecture du tableau 2 permet de voir que le broyage en suspension aqueuse de carbonate de calcium fortement concentrée (76 %) est possible par la mise en oeuvre de sels des acides polyaspartiques ayant un poids moléculaire moyen en poids $\overline{Mw}$ compris entre 3500 et 25000, particulièrement compris ente 4000 et 10000, et plus particulièrement entre 5300 et 8000.

En effet la lecture des résultats obtenus pour les essais n° 15 et 19 met en évidence que l'utilisation d'agent d'aide au broyage de poids moléculaire moyen en poids $\overline{Mw}$ égal à 3700 ou à 21600 permet l'obtention de suspension aqueuse concentrée de carbonate de calcium pompable, ne sédimentant pas et suffisamment affinée pour être utilisable dans des applications telles que la charge de masse du papier sans permettre l'obtention de suspensions d'extrèmes finesses comme celles des essais n° 16 à 18 utilisables dans des applications telles que le couchage du papier.

La lecture du tableau 2 permet également de distinguer les différences notables de viscosité Brookfield après 8 jours de stockage et avant toute agitation de la suspension de l'essai n° 16 (mise en oeuvre d'un agent de poids moléculaire moyen en poids $\overline{Mw}$ = 4200) de celles des suspensions des essais n° 17 et 18 (mise en oeuvre d'agents de poids moléculaire moyen en poids $\overline{Mw}$ = 5700 et $\overline{Mw}$ = 7350).

EXEMPLE 3 :

Le but de cet exemple est d'illustrer l'utilisation, comme agent d'aide au broyage, de mélanges de sels d'acides polyaspartiques avec des homopolymères ou copolymères acryliques ou avec du polysuccinimide.

Pour ce faire, on réalise pour chacun des essais, de l'exemple, le broyage d'une suspension aqueuse de carbonate de calcium naturel de diamètre moyen 50 micromètres provenant du gisement d'Orgon (France) dans les mêmes conditions opératoires et avec le même appareillage que dans les exemples précédents en mettant en oeuvre :

Essai n° 20 :

Un mélange dans un rapport 75 % en poids d'un polyaspartate neutralisé à 50 % molaire par de la soude et à 50 % molaire par de l'hydroxyde de magnésium de $\overline{Mw}$ = 5700 avec 25 % en poids d'un polyacrylate neutralisé à 50 % molaire par de la soude et à 50 % molaire par de l'hydroxyde de magnésium, de même poids moléculaire moyen en poids.

Essai n° 21 :

Un mélange des mêmes polymères dans un rapport pondéral 50 % polyaspartate-50 % polyacrylate.

Essai n° 22 :

Un mélange des mêmes polymères dans un rapport pondéral 25 % polyaspartate-75 % polyacrylate.

Essai n° 23 :

Un mélange dans un rapport 25 % en poids d'un polyaspartate neutralisé à 50 % molaire par de la soude et à 50 % molaire par de l'hydroxyde de magnésium de $\overline{Mw}$ = 5700 avec 75 % en poids d'un copolymère de même poids moléculaire moyen en poids $\overline{Mw}$ = 5700 neutralisé à 50 % molaire par de la soude et à 50 % molaire par de l'hydroxyde de magnésium et composé de 95 % en poids d'acide acrylique et 5 % d'acrylamide.

Essai n° 24 :

Un mélange dans un rapport de 83 % en poids d'un polyaspartate neutralisé à 50 % molaire par de la soude et à 50 % molaire par de l'hydroxyde de magnésium de $\overline{Mw}$ = 5700 avec 17 % en poids d'un polysuccinimide de même poids moléculaire moyen en poids.

Le broyage n'a pu être poursuivi au delà d'une finesse correspondant à 76 % des particules de diamètre inférieur à un micromètre à cause d'une élévation trop importante de la viscosité Brookfield malgré un ajout supplémentaire à 1,35 % en poids sec d'agent d'aide au broyage par rapport au poids sec de carbonate de calcium à affiner.

Les résultats des différents essais de broyage avec les différentes quantité d'agent d'aide au broyage figurent dans le tableau 3 suivant : les divers essais ne présentant, comme dans les exemples précédents, aucune sédimentation.

EP 0 860 477 B1

- TABLEAU 3 -

| | Essai n° | AGENT D'AIDE AU BROYAGE UTILISE | | | | Viscosité Brookfield de la suspension (à 20°C en mPa.s) à 76 % de matière sèche | | | | | |
| | | Mélange Polyaspartate / Polyacrylate (%) (%) | Mw | Extrait sec de la suspension (%) | Consommation en agent en % sec/sec | To 10 T/min | To 100 T/min | 8 jours AVAG 10 T/min | 8 jours AVAG 100 T/min | 8 jours APAG 10 T/min | 8 jours APAG 100 T/min |
|---|---|---|---|---|---|---|---|---|---|---|---|
| Invention | 20 | 75 / 25 | 5700 | 76 | 1,12 | 1700 | 480 | 7000 | 1480 | 1940 | 600 |
| Invention | 21 | 50 / 50 | 5700 | 76 | 1,14 | 1870 | 560 | 5320 | 1220 | 1670 | 500 |
| Invention | 22 | 25 / 75 | 5700 | 76 | 1,17 | 1600 | 460 | 5300 | 1130 | 1400 | 430 |
| Invention | 23 | 25/75 | 5700 | 76 | 1,29 | 1650 | 480 | 5850 | 1250 | 1550 | 480 |
| Invention | 24 | 83/17 (Polysuccinimide) | 5700 | 76 | 1,35* | 1400 | 480 | 5200 | 1260 | 1300 | 430 |

1,35*  Correspond à la quantité d'agent utilisé pour une granulométrie de 76 % < 1 μm  Le broyage ayant été impossible au delà de 76 % < 1 μm

AVAG : Mesure de la viscosité avant agitation de la suspension

APAG : Mesure de la viscosité après agitation de la suspension

La lecture du tableau 3 permet de voir qu'il est possible de broyer des suspensions aqueuses de carbonate de calcium en utilisant comme agent d'aide au broyage des mélanges de sels des acides polyaspartiques avec des homopolymères ou copolymères d'acide acrylique ainsi qu'avec un polysuccinimide.

**Revendications**

1.  Utilisation d'un agent d'aide au broyage dans le but d'obtenir des suspensions aqueuses de matières minérales affinées, pompables, ne sédimentant pas et fortement concentrées en matières minérales **caractérisée en ce que** ledit agent est un sel d'acides polyaspartiques et **en ce que** ledit sel a un poids moléculaire moyen en poids Mw compris entre 3500 et 25000 mesuré par GPC aqueuse.

2.  Utilisation de sels d'acides polyaspartiques comme agent d'aide au broyage selon la revendication 1 **caractérisée en ce que** le sel d'acides polyaspartiques est hydrolysé et neutralisé par au moins un agent d'hydrolyse et de neutralisation disposant d'une fonction monovalente ou par la combinaison d'au moins un agent d'hydrolyse et de neutralisation disposant d'une fonction monovalente avec au moins un agent de neutralisation disposant d'une fonction polyvalente.

3.  Utilisation de sels d'acides polyaspartiques comme agent d'aide au broyage selon l'une des revendications 1 ou 2 **caractérisée en ce que** le sel d'acides polyaspartiques est constitué d'un sel d'homopolymère des acides aspartiques .

4.  Utilisation de sels d'acides polyaspartiques comme agent d'aide au broyage selon l'une des revendications 1 ou 2 **caractérisée en ce que** le sel d'acides polyaspartiques est constitué d'un mélange d'homopolymère de sel des acides aspartiques avec un polysuccinimide ou bien d'un mélange d'homopolymère de sel des acides aspartiques avec un sel d'homopolymère ou copolymère acrylique choisi parmi l'acide acrylique, méthacrylique, acrylamido-méthyl-propane-sulfonique ou bien encore parmi l'anhydride maléique, l'acrylamide, le méthacrylamide, l'ester phosphorique de l'acrylate et/ou méthacrylate d'hydroxy-éthyle et/ou méthyle et leurs mélanges.

5.  Utilisation de sels d'acides polyaspartiques comme agent d'aide au broyage selon la revendication 2 **caractérisée en ce que** l'agent d'hydrolyse et de neutralisation disposant d'une fonction monovalente appartient au groupe constitué par les composés contenant les cations sodium, potassium, ammonium ou bien encore amine primaire ou secondaire.

6.  Utilisation de sels d'acides polyaspartiques comme agent d'aide au broyage selon la revendication 2, **caractérisée en ce que** l'agent d'hydrolyse et de neutralisation disposant d'une fonction polyvalente appartient au groupe constitué par les composés contenant les cations calcium, magnésium, zinc ou aluminium.

7.  Utilisation de sels d'acides polyaspartiques comme agent d'aide au broyage selon l'une quelconque des revendications 1 à 6 **caractérisée en ce que** ledit agent a un poids moléculaire moyen en poids Mw compris entre 4000 et 10000 mesuré par GPC aqueuse.

8.  Utilisation de sels d'acides polyaspartiques selon la revendication 7 **caractérisée en ce que** ledit agent a un poids moléculaire moyen en poids Mw compris entre 5300 et 8000 mesuré par GPC aqueuse.

9.  Utilisation de sels d'acides polyaspartiques selon l'une quelconque des revendications 1 à 8 **caractérisée en ce que** ledit agent est une solution.

10. Utilisation de sels d'acides polyaspartiques selon l'une quelconque des revendications 1 à 8 **caractérisée en ce que** ledit agent est une poudre.

11. Procédé de broyage en suspension aqueuse de matériaux minéraux grossiers destinés à des applications pigmentaires consistant à préparer une suspension aqueuse de ces matériaux, à introduire un agent d'aide au broyage constitué des sels d'acides polyaspartiques, à ajouter à la suspension un corps broyant et à soumettre le mélange ainsi réalisé à une action de broyage, **caractérisé en ce que** ledit agent d'aide au broyage est tel que décrit dans l'une quelconque des revendications 1 à 10.

12. Procédé de broyage en suspension aqueuse de matériaux minéraux selon la revendication 11 **caractérisé en ce**

**que** l'agent d'aide au broyage est introduit au sein de la suspension à raison de 0,2 % à 2 % en poids sec dudit polymère par rapport au poids sec de la substance minérale à broyer.

13. Procédé de broyage en suspension aqueuse de matériaux minéraux selon l'une quelconque des revendications 11 ou 12 **caractérisé en ce que** la suspension aqueuse de matières minérales à broyer comporte au moins 70 % en poids de matières sèches.

14. Suspension aqueuse de matériaux minéraux affinés à l'aide du procédé de broyage selon l'une quelconque des revendications 11 à 13 **caractérisée en ce qu'**elle contient 0,2 à 2 % en poids sec par rapport au poids sec de matières minérales d'un sel d'acides polyaspartiques tel que décrit dans l'une quelconque des revendications 1 à 10, **en ce que** la concentration en matières minérales est d'au moins 70 % et **en ce que** le diamètre médian, déterminé par la mesure au Sédigraph 5100, des particules affinées est inférieur à trois micromètres et préférentiellement inférieur à un micromètre.

15. Suspension aqueuse de matériaux minéraux selon la revendication 14 **caractérisée en ce que** la matière minérale est choisie parmi le carbonate de calcium naturel, le carbonate de calcium synthétique ou les dolomies.

16. Application de la suspension aqueuse de matériaux minéraux selon les revendications 14 et 15 au domaine de la charge de masse du papier et du couchage du papier.


**Patentansprüche**

1. Verwendung eines Mahlhilfsmittels, um pumpfähige wässrige Suspensionen verfeinerter mineralischer Substanzen zu erhalten, die sich nicht absetzen und stark an mineralischen Substanzen konzentriert sind, **dadurch gekennzeichnet, dass** das Mittel ein Salz von Polyasparginsäuren ist, und dadurch, dass das Salz eine mittels wässriger GPC gemessene massegemittelte Molekülmasse Mw zwischen 3500 und 25000 hat.

2. Verwendung von Salzen von Polyasparginsäuren als Mahlhilfsmittel gemäß Anspruch 1, **dadurch gekennzeichnet, dass** das Salz von Polyasparginsäuren mit Hilfe mindestens eines Hydrolyse- und Neutralisationsmittels, das über eine einwertige Funktion verfügt, oder durch Kombination von mindestens einem Hydrolyse- und Neutralisationsmittel, das über eine einwertige Funktion verfügt, mit mindestens einem Neutralisationsmittel, das über eine mehrwertige Funktion verfügt, hydrolysiert und neutralisiert wird.

3. Verwendung von Salzen von Polyasparginsäuren als Mahlhilfsmittel gemäß einem der Ansprüche 1 oder 2, **dadurch gekennzeichnet, dass** das Salz von Polyasparginsäuren aus einem Salz eines Homopolymers von Asparaginsäuren besteht.

4. Verwendung von Salzen von Polyasparginsäuren als Mahlhilfsmittel gemäß einem der Ansprüche 1 oder 2, **dadurch gekennzeichnet, dass** das Salz von Polyasparginsäuren aus einem Gemisch eines Homopolymeren eines Salzes von Asparaginsäuren mit einem Polysuccinimid oder aus einem Gemisch eines Homopolymeren eines Salzes von Asparaginsäuren mit einem Salz von Acrylhomopolymer oder - copolymer, ausgewählt aus Acrylsäure, Methacrylsäure, Acrylamidomethylpropansulfonsäure oder auch aus Maleinsäureanhydrid, Acrylamid, Methacrylamid, Hydroxyethylacrylatphosphorsäureester und/oder Hydroxymethylacrylatphosphorsäureester und/oder Hydroxyethylmethacrylatphosphorsäureester und/oder Hydroxymethylmethacrylatphosphorsäureester und ihren Gemischen, besteht.

5. Verwendung von Salzen von Polyasparginsäuren als Mahlhilfsmittel gemäß Anspruch 2, **dadurch gekennzeichnet, dass** das Hydrolyse- und Neutralisationsmittel, das über eine einwertige Funktion verfügt, aus der Gruppe stammt, die aus Verbindungen, die Natrium-, Kalium-, Ammonium- oder auch primäre oder sekundäre Aminkationen enthalten, besteht.

6. Verwendung von Salzen von Polyasparginsäuren als Mahlhilfsmittel gemäß Anspruch 2, **dadurch gekennzeichnet, dass** das Hydrolyse- und Neutralisationsmittel, das über eine mehrwertige Funktion verfügt, aus der Gruppe stammt, die aus Verbindungen, die Calcium-, Magnesium-, Zink- oder Aluminiumkationen enthalten, besteht.

7. Verwendung von Salzen von Polyasparginsäuren als Mahlhilfsmittel gemäß einem der Ansprüche 1 bis 6, **dadurch gekennzeichnet, dass** das Mittel eine durch wässrige GPC gemessene, massegemittelte Molekülmasse Mw zwischen 4000 und 10000 hat.

8. Verwendung von Salzen von Polyasparaginsäuren gemäß Anspruch 7, **dadurch gekennzeichnet, dass** das Mittel eine durch wässrige GPC gemessene, massegemittelte Molekülmasse Mw zwischen 5300 und 8000 hat.

9. Verwendung von Salzen von Polyasparaginsäuren gemäß einem der Ansprüche 1 bis 8, **dadurch gekennzeichnet, dass** das Mittel eine Lösung ist.

10. Verwendung von Salzen von Polyasparaginsäuren gemäß einem der Ansprüche 1 bis 8, **dadurch gekennzeichnet, dass** das Mittel ein Pulver ist.

11. Mahlverfahren in wässriger Suspension für grobe, mineralische Substanzen, die für Pigmentanwendungen bestimmt sind, bestehend aus dem Herstellen einer wässrigen Suspension dieser Substanzen, dem Einbringen eines Mahlhilfsmittels, das aus Salzen von Polyasparaginsäuren besteht, dem Hinzufügen eines Mahlkörpers zu der Suspension und dem Unterwerfen des so hergestellten Gemisches einem Mahlvorgang, **dadurch gekennzeichnet, dass** das Mahlhilfsmittel derart ist, wie in einem der Ansprüche 1 bis 10 beschrieben.

12. Mahlverfahren in wässriger Suspension für mineralische Substanzen gemäß Anspruch 11, **dadurch gekennzeichnet, dass** von dem Mahlhilfsmittel in die Suspension 0,2% bis 2% Trockengewicht des Polymers, bezogen auf das Trockengewicht der zu mahlenden mineralischen Substanz, eingebracht werden.

13. Mahlverfahren in wässriger Suspension für mineralische Substanzen gemäß einem der Ansprüche 11 oder 12, **dadurch gekennzeichnet, dass** die wässrige Suspension der zu mahlenden mineralischen Substanzen mindestens 70 Gew.-% an Trockensubstanzen umfasst.

14. Wässrige Suspension mineralischer Substanzen, die mit Hilfe des Mahlverfahrens nach einem der Ansprüche 11 bis 13 verfeinert worden sind, **dadurch gekennzeichnet, dass** sie 0,2 bis 2% Trockengewicht, bezogen auf das Trockengewicht der mineralischen Substanzen, eines Salzes von Polyasparaginsäuren, wie in einem der Ansprüche 1 bis 10 beschrieben, enthält,
und dadurch, dass die Konzentration an mineralischen Substanzen mindestens 70% beträgt
und dadurch, dass der durch Messung mittels Sedigraph 5100 bestimmte mittlere Durchmesser der verfeinerten Partikel kleiner als drei Mikrometer und vorzugsweise kleiner als ein Mikrometer ist.

15. Wässrige Suspension mineralischer Substanzen gemäß Anspruch 14, **dadurch gekennzeichnet, dass** die mineralische Substanz aus natürlichem Calciumcarbonat, synthetischem Calciumcarbonat oder Dolomitmineralien ausgewählt ist.

16. Anwendung der wässrigen Suspension mineralischer Materialien nach den Ansprüchen 14 und 15 auf dem Gebiet des Papiermassenfüllstoffs und der Papierbeschichtung.

## Claims

1. Use of a grinding aid agent to obtain aqueous suspensions of refined, pumpable mineral materials which do not settle and have high concentrations of mineral materials, *characterised by the fact that* the said agent is a salt of polyaspartic acids and by the fact that the said salt has a mean molecular weight by weight Mw of between 3500 and 25000 measured by aqueous GPC.

2. Use of salts of polyaspartic acids as a grinding aid agent as described in claim 1, *characterised by the fact that* the salt of polyaspartic acids is hydrolysed and neutralised by at least one hydrolysis and neutralization agent having available a monovalent function or by combination of at least one hydrolysis and neutralization agent having available a monovalent function with at least one neutralization agent having available a polyvalent function.

3. Use of salts of polyaspartic acids as a grinding aid agent as described in one of claims 1 or 2, *characterised by the fact that* the salt of polyaspartic acids consists of a salt of a homopolymer of aspartic acids.

4. Use of salts of polyaspartic acids as a grinding aid agent as described in one of claims 1 or 2, *characterised by the fact that* the salt of polyaspartic acids consists of a mixture of homopolymer of salt of aspartic acids with a polysuccinimide, or a mixture of homopolymer of salt of aspartic acids with an acrylic homopolymer or copolymer salt selected from acrylic, methacrylic and acrylamido-methyl-propane-sulphonic acid, or from maleic anhydride, acrylamide, methacrylamide, hydroxy-ethyl and/or methyl acrylate and/or methacrylate phosphoric ester and their mixtures.

5. Use of salts of polyaspartic acids as a grinding aid agent as described in claim 2, *characterised by the fact that* the hydrolysis and neutralization agent having available a monovalent function belongs to the group consisting of compounds containing sodium, potassium, or ammonium cations, or primary or secondary amine.

6. Use of salts of polyaspartic acids as a grinding aid agent as described in claim 2, **characterised by the fact that** the hydrolysis and neutralization agent having available a polyvalent function belongs to the group formed of compounds containing calcium, magnesium, zinc, or aluminium cations.

7. Use of salts of polyaspartic acids as a grinding aid agent as described in any one of claims 1 to 6, *characterised by the fact that* the said agent has a mean molecular weight by weight Mw of between 4000 and 10000 measured by aqueous GPC.

8. Use of salts of polyaspartic acids as described in claim 7, *characterised by the fact that* the said agent has a mean molecular weight by weight Mw of between 5300 and 8000 measured by aqueous GPC.

9. Use of salts of polyaspartic acids as described in any one of claims 1 to 8, *characterised by the fact that* the said agent is a solution.

10. Use of salts of polyaspartic acids as described in any one of claims 1 to 8, *characterised by the fact that* the said agent is a powder.

11. Process for grinding coarse mineral materials intended for pigmentary applications in aqueous suspension consisting of preparing an aqueous suspension of these materials, of introducing a grinding aid agent formed of salts of polyaspartic acids, of adding a grinding body to the suspension and of subjecting the mixture thus created to a grinding action, *characterised by the fact that* the said grinding aid agent is such as described in any one of claims 1 to 10.

12. Process for grinding mineral materials in aqueous suspension as described in claim 11, *characterised by the fact that* the grinding aid agent is introduced into the suspension at the rate of 0.2% to 2% by dry weight of the said polymer relative to the dry weight of the mineral substance to be ground.

13. Process for grinding mineral materials in aqueous suspension as described in any one of claims 11 or 12, *characterised by the fact that* the aqueous suspension of mineral materials to be ground includes at least 70% by weight of dry matter.

14. Aqueous suspension of mineral materials fined by means of the grinding process as described in any one of claims 11 to 13, *characterised by the fact that* it contains 0.2 to 2% by dry weight relative to the dry weight of mineral materials of a salt of polyaspartic acids such as described in any one of claims 1 to 10,
*by the fact that* the mineral material concentration is at least 70%, and
*by the fact that* the median diameter, determined by measurement with the Sédigraph 5100, of the refined particles is less than three micrometres and preferably less than one micrometre.

15. Aqueous suspension of mineral materials as described in claim 14, *characterised by the fact that* the mineral material is selected from natural calcium carbonate, synthetic calcium carbonate, or dolomites.

16. Application of the aqueous suspension of mineral materials as described in claims 14 and 15 to the field of filling paper and of coating paper.